# DEMANDE DE BREVET EUROPEEN

(11) **EP 4 538 303 A1**
(43) Date de publication de la demande: **16.04.2025**
(21) Numéro de dépôt: 24205668.7
(22) Date de dépôt: 09.10.2024
(51) Int. Cl.: C08F 8/28, C08F 8/30, D06M 15/03, D06M 15/333, D06M 15/53

(54) **PROCÉDE DE FABRICATION D'UNE ARCHITECTURE FIBREUSE RECYCLABLE**

(30) Priorité: 11.10.2023 FR 2310918
(71) Demandeur: Commissariat à l'Energie Atomique et aux Energies Alternatives, 75015 Paris (FR)
(72) Inventeur: PILUSO, Pierre, 38054 Grenoble cedex 9 (FR); RENARD, Olivier, 38054 Grenoble cedex 9 (FR); AUGER, Aurélien, 38054 Grenoble cedex 09 (FR); TIQUET, Pascal, 38054 Grenoble cedex 09 (FR); REVOL, Morgane, 38054 Grenoble cedex 09 (FR)
(74) Mandataire: Germain Maureau

(57) **Abrégé**

Procédé de fabrication d'architectures fibreuses recyclables, comprenant les étapes suivantes :
- a) fourniture d'une solution aqueuse dans laquelle est dissout au moins un polymère hydrosoluble,
- b) fonctionnalisation du polymère hydrosoluble par réaction d'un premier réactif de type diène et/ou d'un deuxième réactif de type diénophile, le premier réactif et le deuxième réactif formant un couple de cyclo-addition apte à réaliser une réaction de cyclo-addition réversible, notamment une réaction de cyclo-addition réversible de type Diels Aider,
- c) addition respective du deuxième réactif et/ou du premier réactif du couple de réactifs de sorte à obtenir une formulation de précurseurs de la formulation d'adhésif,
- d) enduction de fibres de polymère, par la formulation de précurseurs,
- e) application d'un traitement thermique de réticulation de la formulation de précurseurs de sorte à obtenir une formulation d'adhésif apte à assembler de manière réversible les fibres de polymère en une architecture fibreuse recyclable.

## Description

L'invention concerne le domaine des matelassures utilisées dans la fabrication de sièges et d'éléments d'assise de moyens de transports, notamment de transport automobile, ferrovière et d'aviation. L'invention se rapporte en particulier à la fabrication d'une architecture fibreuse recyclable utilisable pour de telle matelassure et à son procédé de recyclage.

Les matelassures utilisées aujourd'hui dans le domaine automobile sont constituées de mousses polyuréthane (PU), formées à partir d'un mélange d'isocyanate et de polyols. La réaction de réticulation entre les réactifs est rapide. Le moussage du PU est réalisé en simultané à la polymérisation, par exemple via l'ajout d'eau, qui dégage du CO₂ en réaction avec les isocyanates. Les mousses de PU obtenues peuvent avoir des densités variables, de l'ordre de 50 à 100 g/m³ par exemple, et des duretés variables, en modifiant simplement le ratio isocyanate/polyol, ou en modifiant la nature des monomères.

Malgré tous ces avantages, l'utilisation de polyuréthane présente plusieurs défauts importants. Premièrement, les isocyanates utilisés dans leur procédé de fabrication sont des composés très toxiques, posant de nombreux problèmes de sécurité, et sont susceptibles d'être régulés dans le futur (par REACH notamment). Ces isocyanates sont par ailleurs obtenus eux mêmes à partir de phosgène, qui est très néfaste sur un plan environnemental et toxicologique.

En outre, les polyuréthanes thermodurcissables sont aujourd'hui très difficiles à recycler. Plusieurs méthodes de recyclage ou de traitement des déchets existent : le recyclage mécanique, chimique, et thermique, ainsi que, sans l'assimiler à une méthode de recyclage, l'enfouissement.

Le recyclage mécanique consiste à broyer ou microniser des mousses de PU et les réincorporer en tant que charge dans la formulation initiale de monomères. Cette méthode est plutôt utilisée pour revaloriser les chutes de production et reste limitée en terme de quantité de PU réinjectable dans la formulation, sans perte de propriétés.

Le recyclage thermique consiste à brûler les PU et les gaz émis pour récupérer de l'énergie. Sans même parler des problèmes environnementaux évidents liés à la méthode (émissions de COx, NOx), les précurseurs utilisés dans la fabrication de PU sont perdus.

Le recyclage chimique consiste à dépolymériser les PU pour obtenir des monomères de base, ce qui permet de réinjecter les monomères obtenus dans le cycle du PU ou dans d'autres industries chimiques. Cette méthode, bien que prometteuse sur le papier, consomme beaucoup d'énergie, puisqu'il faut briser l'ensemble des liaisons des polymères dans un premier temps, puis dépenser à nouveau de l'énergie pour séparer le mélange de composés obtenu. La valorisation de la matière PU n'est pas non plus de 100% en général, des réactions parasites pouvant avoir lieu dans le procédé.

Dans ce cadre, l'industrie des transports, et notamment l'automobile cherche des méthodes alternatives pour pallier ces problèmes. L'une des approches consiste à substituer les mousses PU par d'autres matières. Parmi les alternatives, il existe une voie comportant l'utilisation de fibres en tant que matériau de garnissage de matelassures, notamment de fibres polymères, disponibles peu coûteuses sur le marché, notamment les fibres PET (polyéthylène téréphtalate, généralement dénommées fibres de polyester dans le domaine textile). Les propriétés et problématiques de ces garnitures sont déjà renseignées dans la littérature : perte d'épaisseur par tassement des fibres et déformations provoquent la dégradation dans le temps des propriétés d'assise, au contraire de la mousse de PU. En effet, alors que des fibres peuvent glisser entre elles sous contrainte et ne pas se replacer dans leur état initial, lorsque le PU est soumis à compression, étant formé d'un seul bloc, il transmet la contrainte dans l'ensemble du matériau ce qui lui permet de rester dans un domaine macroscopique d'élasticité.

Des travaux ont alors consisté à relier des fibres discrètes par un liant polymère, de manière à pallier à ce problème de glissement entre les fibres. Par exemple, un matériau de packaging substituant des chips de polystyrène expansé a été mis en point en formant un composite à partir de fibres de bagasse (fibres naturelles), liées par un polymère hydrosoluble, l'alcool polyvinylique (PVA), et moussé l'ensemble via un agent moussant chimique en tétraborate de sodium. Toutefois, ce système comportant du PVA et de la bagasse présentait une sensibilité importante à l'eau et sa présence était susceptible de détruire la réticulation via le tétraborate de sodium. De plus, les performances thermiques de ces systèmes n'ont pas été reportées, sachant que dans l'application automobile, il est important de maintenir une assise stable jusqu'à des températures de 80 °C, typiquement atteintes dans un véhicule un jour d'été en plein soleil. Une autre solution consiste à utiliser un mélange de fibres de polymères de type PES/PET et un liant, apporté en émulsion aqueuse, de type polyuréthane ou chloroprène mais l'utilisation de liants thermodurcissables empêche tout recyclage.

Un des buts de la présente invention consiste à pallier les inconvénients susmentionnés. A cet effet, la présente invention propose un procédé de fabrication d'architectures fibreuses recyclables, notamment pour une utilisation en garnissage, le procédé de fabrication comprenant les étapes suivantes :
- a) fourniture d'une solution aqueuse dans laquelle est dissout au moins un polymère hydrosoluble, notamment un polymère choisi parmi un alcool polyvinylique PVA, un polyéthylène glycol PEG, et un polysaccharide, la solution aqueuse comprenant de l'eau distillée;
- b) fonctionnalisation du polymère hydrosoluble par réaction d'un premier réactif de type diène et/ou d'un deuxième réactif de type diénophile, le premier réactif et le deuxième réactif formant un couple de cyclo-addition apte à réaliser ensemble une réaction de cyclo-addition réversible, notamment une réaction de cyclo-addition réversible de type Diels Alder, par exemple le premier réactif comporte des groupements furanes et/ou anthracènes et le deuxième réactif comprend des groupements maléimides.

- c) addition respective du deuxième réactif et/ou du premier réactif du couple de cyclo-addition, de sorte à obtenir une formulation de précurseurs de la formulation d'adhésif,
- d) enduction de fibres de polymère, notamment des fibres en polyéthylène téréphtalate (PET) ou en polyamide (PA), par la formulation de précurseurs, notamment par coulée sur les fibres ou par immersion des fibres dans la formulation de précurseurs,
- e) application d'un traitement thermique de réticulation de la formulation de précurseurs, de sorte à obtenir une formulation d'adhésif apte à assembler de manière réversible les fibres de polymère en une architecture fibreuse recyclable.

Ainsi, l'invention propose un procédé de fabrication d'un architecture fibreuse recyclable dans laquelle les fibres ne glissent pas, et qui est adaptée à la réalisation de matelassures à base de fibres de polymère, liées par un adhésif également polymérique et réticulé de manière réversible, permettant le recyclage et la séparation des éléments constitutifs en vue de leur réutilisation. Il est entendu que dans le présent document les fibres de polymère sont distinctes du polymère hydrosoluble au sens de l'invention.

La formulation d'adhésif étant réalisée dans l'eau, l'adhésif est appliqué en solution aqueuse sur les fibres puis séché et réticulé simultanément. La réticulation est réalisée via une chimie covalente et réversible par cyclo-addition de type Diels Alder. La chimie de réticulation covalente réversible est choisie de manière à maintenir les propriétés de l'adhésif stables dans le temps et dans une gamme de température allant jusqu'à environ 100 °C. La réversibilité de la chimie (ou retro-Diels Alder) peut être déclenchée dans des conditions spécifiques : par immersion en milieu aqueux et à une température supérieure à 100 °C (sous pression d'eau donc), de sorte à ce qu'elle ne puisse pas être déclenchée dans des conditions d'utilisation usuelles des matelassures. Comme on le verra par la suite, cette chimie réversible assure également la recyclabilité de l'architecture fibreuse en permettant la séparation des fibres utilisées de la formulation d'adhésif dans son intégralité, et donc leurs réemplois possibles, dans la même application. En effet, en fin de procédé de séparation, l'adhésif repasse en solution aqueuse, et il est possible de filtrer les fibres pour les séparer de l'adhésif en solution. La formulation d'adhésif peut être réutilisée telle quelle ou après concentration éventuelle.

Ce procédé permet d'obtenir des architectures fibreuses recyclables présentant une portance identique à celle de la mousse polyuréthane mais une densité inférieure à celle du PU (entre 36 et 43 kg/m³ pour l'architecture fibreuse contre environ 60 kg/m³ pour la mousse PU). Les garnissages obtenus à partir de ces architectures sont ainsi allégés, ce qui est très recherché dans le domaine des transports et notamment dans l'automobile, l'aviation, ...etc.

Selon une possibilité, les architectures fibreuses recyclables obtenues par ledit procédé présentent une portance comprise entre 5 et 50kPa à 50 % de déformation, par exemple de 7kPa à 50 % de déformation.

Selon une disposition, le polymère hydrophile comprend des terminaisons hydroxyles. Ces terminaisons hydroxyles constituent des sites de réaction de choix avec le premier et/ou le deuxième réactif du couple de cyclo-addition. La nature hydrophobe de ces réactifs contribue à diminuer le caractère hydrophile du polymère fonctionnalisé de sorte que la teneur initiale des terminaisons hydroxyles dans le polymère est élevée pour conserver le caractère soluble du polymère fonctionnalisé.

Selon un mode de réalisation particulier du procédé, celui-ci comprend une étape i) d'application d'un prétraitement thermique de pré-réticulation avant l'étape d) d'enduction du procédé, de sorte à réticuler en partie la formulation de précurseurs. La température et/ou la durée du prétraitement thermique de pré-réticulation appliqué(es) est juste suffisante pour obtenir une réticulation partielle de la formulation de précurseurs de sorte que la formulation de précurseurs ne soit pas totalement réticulée à l'issue de l'étape i). Cette étape i) permet d'augmenter la viscosité de la formulation, facilitant l'enduction sur les fibres selon l'étape d) le cas échéant. En effet, lorsque la formulation aqueuse de précurseurs est très liquide, l'enduction est plus difficile. Dans le cas où elle est réalisée par coulée, le liquide a tendance à couler sans avoir le temps d'imprégner les fibres de polymère. Dans le cas où l'enduction est réalisée par immersion, là encore, selon la viscosité de la formulation, les fibres ne retiennent pas suffisamment la formulation notamment car les forces capillaires ne sont pas suffisantes.

De préférence, l'étape i) est stoppée avant que la viscosité de la formulation de précurseurs atteigne la valeur de 10¹⁰ Pa.s , voire 10¹¹ Pa.s et de préférence 10¹² Pa.s. Cette dernière valeur constitue le seuil au dela duquel l'application sur les fibres sera trop difficile. La viscosité est mesurée par exemple par viscosimètre ou par rhéomètre.

Selon une possibilité, l'application d'un traitement thermique de réticulation selon l'étape e) réalisée après enduction selon l'étape d), finalise la réticulation du polymère fonctionnalisé et dure moins longtemps qu'en l'absence de l'étape i).

Selon une disposition, le procédé comprend avant et /ou pendant la réalisation de l'étape d'application d'un traitement thermique de réticulation e), une étape de compression ii) des fibres de polymère enduites, de sorte à essorer les fibres de polymère et retirer le surplus de la formulation de précurseurs. Cette étape permet également la mise en forme des fibres et d'atteindre la portance adéquate à l'objectif visé.

Selon une possibilité, le procédé comprend la disposition des fibres de polymère dans un moule comportant la forme finale souhaitée, avant l'étape ii) d'application de la compression.

Selon une disposition, l'étape de compression ii) comprend l'application d'une pression différentielle réalisée en appliquant localement différentes valeurs de pression de sorte à obtenir des régions plus ou moins denses dans l'architecture fibreuse recyclable à l'issue de l'étape e). Cette disposition permet d'atteindre une architecture fibreuse présentant des rigidités localisées, particulièrement adaptées à des applications dans le garnissage, notamment de matelas, de siège et autres éléments d'assises.

Avantageusement, l'étape d'application d'une pression différentielle ii) est réalisée par utilisation d'un moule comprenant une contre-forme apte à appliquer une pression différentielle selon différentes régions des fibres enduites.

Selon une disposition, l'application du traitement thermique de réticulation est réalisée par un flux d'air chaud. Ceci assure la réticulation et le séchage.

Selon une possibilité, le polymère hydrosoluble est un dérivé de polyacétate de vinyle comprenant un taux d'hydrolyse de 95%.

Selon une disposition le polymère hydrosoluble est un dérivé de polyacétate de vinyle et le taux de fonctionnalisation par des groupements furanes est compris dans une fourchette allant de 1 % à 6,5 % en mole. En effet, le furane est un réactif hydrophobe qui une fois greffé sur polymère hydrophile diminue la solubilité de ce dernier de sorte qu'il est nécessaire de limiter la fonctionnalisation

Selon une disposition, les proportions relatives en polymère hydrosoluble, en premier réactif de type diène, en deuxième réactif de type diénophile et en fibres de polymère sont choisis de sorte que le rapport de masse d'adhésif sec par masse de fibres de polymère est compris entre 10 et 30 % dans l'architecture fibreuse recyclable obtenue à l'étape e). Il est entendu que la masse d'adhésif sec correspond à la masse de polymère réticulé et asséché du solvant aqueux. Celui-ci peut être calculé à partir de la masse de l'architecture fibreuse récupérée, une fois que celle-ci est séchée à l'étuve (100 °C) et n'évolue plus (absence d'eau résiduelle) minorée de la masse des fibres de polymère ajoutées à l'étape d).

Selon une possibilité, le procédé comprend avant l'étape e), une étape iii) de structuration de la formulation de précurseurs, notamment par moussage, ou en ajoutant des agents ayant la même fonction, avant ou pendant l'application sur les fibres de polymère.

Selon une disposition, le polymère hydrosoluble PVA ayant tendance à mousser naturellement, l'étape iii) de structuration est réalisée au moment de l'enduction par injection d'un gaz dans la formulation de précurseurs.

La fonctionnalisation de polymère hydrophile par un réactif hydrophobe choisi parmi le premier réactif de type diène et/ou le deuxième réactif de type diénophile est inférieure à 15 % molaire des fonctions hydrophiles, et de préférence inférieure à 10% de sorte à éviter que le polymère fonctionnalisé à l'issu de l'étape b) ne précipite dans la solution aqueuse.

Selon un autre aspect, l'invention propose également un procédé de recyclage de l'architecture fibreuse recyclable obtenue selon le procédé de fabrication précédemment décrit. Le procédé de recyclage comprenant les étapes suivantes :
- x) disposition de l'architecture fibreuse dans un autoclave en présence d'eau,
- y) application d'un traitement thermique à une température comprise entre 100 et 130 °C pendant quelques heures,
- z) filtration des fibres de polymère permettant de séparer les fibres de polymère d'une part et un filtrat comprenant le polymère hydrosoluble et les réactifs du couple de cyclo-addition d'autre part.

Ce procédé utilise la réversibilité des réactions chimiques mises en jeu lors du procédé de fabrication. L'étape d'application du traitement thermique selon l'étape y) est réalisée dans l'autoclave fermé et permet de réaliser une réaction de rétro-Diels Alder. Ces conditions permettent une élévation de la pression jusqu'à environ 4 bars. Dans tous les cas, la pression reste inférieure à 5 bars dans l'autoclave.

La solution aqueuse peut être à nouveau utilisée dans le procédé de fabrication de l'architecture fibreuse.

Selon d'autres caractéristiques, le procédé de fabrication de l'invention comporte une ou plusieurs des caractéristiques optionnelles suivantes considérées seules ou en combinaison :
- La réaction de fonctionnalisation selon l'étape b) comprend la formation de liaisons covalentes entre le polymère hydrosoluble et le premier et/ou le deuxième réactif du couple de cyclo-addition.
- Les terminaisons hydroxyles de polymère hydrophiles sont fonctionnalisées en partie par le premier réactif de type diène et en partie par le deuxième réactif de type diénophile.
- Les terminaisons hydroxyles de polymère hydrophiles sont fonctionnalisées en partie par un premier réactif de type diène comportant soit des groupements furanes et/ou soit des groupements anthracènes.
- Le premier reactif de type diène est choisi parmi du furfural, du chlorure de 2-furoyle et un mélange de ces réactifs.
- Le deuxième réactif de type diénophile est choisi parmi les bis-maléimides et par exemple le 1,2 phénylène bis-maléimide (PDM).
- Les fibres de polymère sont choisies parmi des fibres de PET et/ou des fibres de polyamide.
- Les fibres de polymère comprennent des polymères de nature différente.
- Les fibres de polymère comprennent ou sont constitutées d'une seule nature de polymère.
- Les fibres de polymère présentent des diamètres variés, notamment entre 10 micromètres et 2 mm.
- Les fibres de polymère sont de longueurs variées, notamment entre 1 et 50 cm.
- Les fibres de polymère sont pré-organisées de sorte à être enchevêtrées préalablement à l'étape d), notamment par des procédés d'aiguilletage.
- L'étape ii) de compression est maintenue pendant l'étape e) d'application du traitement thermique de réticulation.
- Le moule comprend des orifices d'évacuation configurés pour assurer l'évacuation du surplus de la formulation de précurseurs.
- La concentration en polymère hydrophile dans la solution aqueuse est comprise entre 5 et 9% en masse à l'étape a).

D'autres aspects, buts et avantages de la présente invention apparaîtront mieux à la lecture de la description suivante d'un mode de réalisation de celle-ci, donnée à titre d'exemple non limitatif et fait en référence aux dessins annexés. Dans la suite de la description, par souci de simplification, des éléments identiques, similaires ou équivalents des différentes formes de réalisation portent les mêmes références numériques sur les figures dans lesquelles :
La figure 1 illustre trois exemples de polymère hydrosoluble selon un mode de réalisation du procédé selon l'invention.
La figure 2 illustre un exemple de réaction de fonctionnalisation du polymère hydrosoluble par un premier réactif de type diène selon un mode de réalisation du procédé selon l'invention.
La figure 3 illustre une réaction de type Diels Alder en partant d'un premier réactif de type diène et un deuxième réactif de type diénophile formant un couple de cyclo-addition selon un mode de réalisation du procédé selon l'invention.
La figure 4 illustre un exemple de réticulation entre un polymère hydrophile fonctionnalisé par un groupement furane et un réactif bis-maléimide en formant une cyclo-addition réversible de type Diels Alder selon un mode de réalisation du procédé selon l'invention.
La figure 5 illustre un autre exemple de réticulation entre un polymère hydrophile fonctionnalisé par un groupement furane et un polymère hydrophile fonctionnalisé par un groupement bis-maléimide en formant une cyclo-addition réversible de type Diels Alder selon un autre mode de réalisation du procédé selon l'invention.
La figure 6 illustre un spectre RMN d'un polymère fonctionnalisé par du furfural et du furfural libre résiduel.

Le procédé de fabrication d'une architecture fibreuse recyclable comprend des étapes consistant à lier les fibres de polymère entre elles par un précurseur d'adhésif polymérique, puis d'appliquer un traitement thermique de sorte à réticuler les précurseurs et fixer les fibres de polymère selon une architecture fibreuse recyclable.

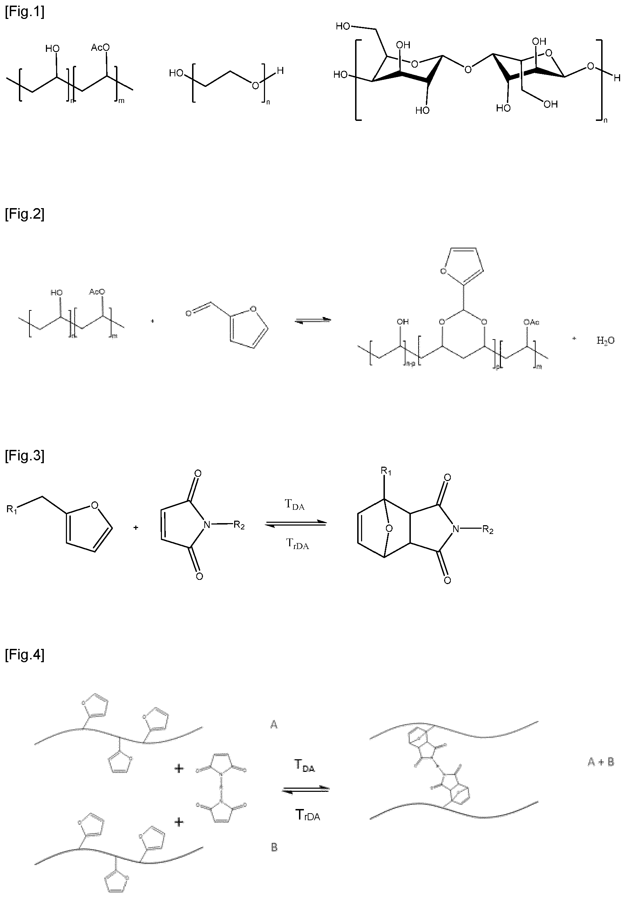

Tout d'abord, le procédé de l'invention comprend des étapes consistant à préparer une formulation de précurseur de l'adhésif polymérique selon une chimie réversible et propre, principalement réalisée en solution aqueuse. Pour ce faire, le procédé considère un polymère hydrophile (par exemple le PVA parmi les exemples de la figure 1) qui formera le squelette de l'adhésif polymérique, pour le dissoudre et former une solution aqueuse.

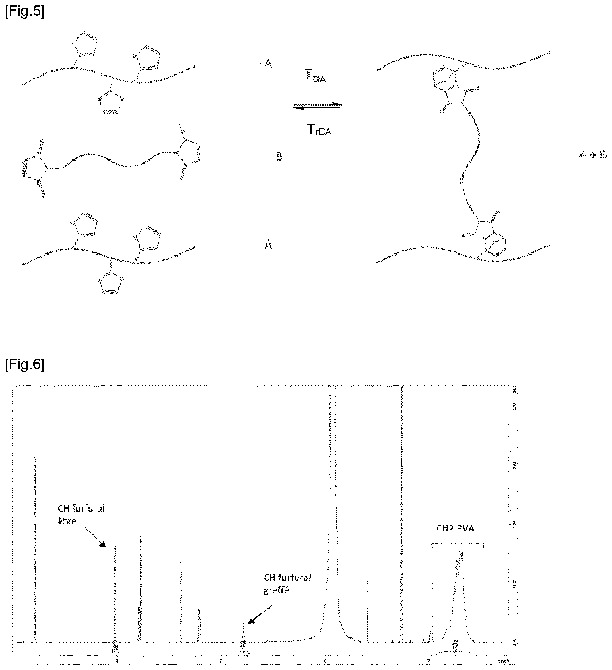

Puis selon l'étape b) du procédé, une réaction de fonctionnalisation polymère hydrophile est réalisée avec un premier réactif de type diène, ici du furfural (figure 2). Une fois cette fonctionnalisation obtenue, le procédé comprend une étape c) d'addition d'un deuxième réactif de type diénophile (figure 3) au polymère fonctionnalisé de sorte à obtenir une solution aqueuse comprenant un couple de cyclo-addition permettant de réaliser une réaction de Diels Aider réversible comme illustré à la figure 3. Ces étapes conduisent à l'obtention de la formulation de précurseurs de l'adhésif polymérique. Des fibres de polymère sont ensuite enduites de cette formulation (étape d) et un traitement thermique de réticulation est appliqué. Celui-ci permet d'obtenir une formulation d'adhésif (réseau A+B aux figures 4 et 5), qui une fois séchée, fixe les fibres de polymère dans une architecture fibreuse recyclable.

### Fonctionnalisation du polymère hydrophile

Un exemple concret de réalisation est décrit. Dans un ballon de 500 mL équipé d'un agitateur mécanique motorisé sont placés 16 g de PVA de grade 56-98 ainsi que 200 g d'eau distillée. Le tout est chauffé 1 h sous agitation à 90 °C jusqu'à dissolution complète du PVA. La solution aqueuse est acidifiée avec de l'APTS (acide p-toluène sulfonique) jusqu'à atteindre un pH de 1,7 environ. L'APTS est utilisé comme catalyseur pour accentuer le caractère électrophile de l'aldéhyde en vue de synthétiser un acétal. Ensuite, après refroidissement à température ambiante, 2.26 ml de furfural (premier réactif de type diène) sont ajoutés au mélange et laissé sous agitation 6 h de sorte à réaliser l'étape b) de fonctionnalisation du PVA. La solution est ensuite neutralisée à un pH neutre avec une solution de KOH, puis le polymère fonctionnalisé est précipité lentement par ajout d'éthanol. Le polymère est ainsi purifié et ensuite filtré puis séché à l'air libre. Le greffage du furfural peut être observé en RMN (figure 6).

### Cyclo-addition de type Diels-Alder

Le polymère ainsi fonctionnalisé par des furanes est ensuite dissout dans l'eau avec une concentration de 6% en masse en chauffant une heure à 90 °C. Pour 5 g de polymère fonctionnalisé sont ajoutés 60 mg de N,N'-(1,3-Phenylene) bis maléimide (PDM) comme deuxième réactif de type diénophile (ou agent réticulant) sous agitation mécanique. La réticulation débute dès cet instant. Un gel est obtenu au bout de 2h30 de chauffe à 60 °C, démontrant la réticulation du polymère fonctionnalisé et formant la formulation d'adhésif.

### Enduction sur des fibres de polymères

Des formulations de précurseurs comprenant 2%, 4% et 6% massique de PVA dans l'eau et du PDM sont préparées comme précédemment décrit. Afin d'optimiser la viscosité de la formulation, un traitement thermique est appliqué à 60 °C pendant 30 min (étape i) du procédé). Puis environ 2 g de fibres de PET de longueur 60 mm dTex 33 sont totalement immergées selon l'étape d) du procédé dans chacune des solutions (à 2%, 4% et 6% massique de PVA avec PDM). Les fibres sont ensuite placées dans un moule comprenant des orifices d'évacuation de la formulation de précurseurs puis compressées pour éliminer une partie de la formulation via une entretoise de la taille du moule. La pression appliquée peut être comprise entre 50 et 500 kPa, notamment environ 200 kPa. Ensuite, l'entretoise est partiellement relevée au 2/3 de la hauteur initiale prise par les fibres de sorte que les fibres décompressent, sans revenir pour autant à l'état naturel initial et le tout est placé à l'étuve à 80 °C durant 24 h pour obtenir la réticulation. La hauteur de l'entretoise est généralement ajustée selon la densité cible de la matelassure. Une architecture fibreuse comprenant lesdites fibres de PET solidarisées entre elles par la formulation d'adhésif est finalement obtenue. Des quantités respectives de 0,23 g ; 0,46 g ; et de 0,84 g d'adhésif sec sont déposées sur les fibres via cette méthode pour une concentration initiale respectivement de 2, 4 et 6 % massique de PVA, soit un ratio PVA/fibre de PET de 11%, 23% et 42 % respectivement.

### Application dans le garnissage

Les matelassures formées à partir des architectures fibreuses obtenues de la solution aqueuse à 6 % massique de PVA ont présenté une très forte rigidité, incompatible avec l'application visée.

Les matelassures formées de la même manière à partir des architectures fibreuses obtenues de la solution aqueuse à 2% massique de PVA étaient dans la limite de souplesse acceptable pour l'application visée.

### Recyclage de l'architecture fibreuse

Une matelassure formée de manière similaire à l'exemple précédent, comprenant une architecture fibreuse constituée de 1 g de fibres et de 0,5 g d'adhésif est placée dans 300 mL d'eau, dans un autoclave de 600 ml. Un traitement thermique est appliqué à 120 °C durant 2 h. L'atmosphère dans l'autoclave monte légèrement en pression durant le procédé (moins de 5 bar). En fin de procédé, les fibres sont récupérées, rincées à l'eau distillée, et le milieu aqueux est récupéré séparément. Il a la même apparence qu'avant la réticulation, il est jaune et mousseux. Après séchage, les fibres sont observées au microscope optique et révèlent une surface exempte d'adhésif. Les fibres sont pesées et montrent une masse de 0,52 g.

Après séchage du filtrat, un film de polymère est obtenu et peut-être isolé. Le film doit être chauffé à 120 °C dans le DMSO pour pouvoir être dissout, ce qui montre que l'adhésif a réticulé à nouveau durant le séchage du filtrat. Les analyses RMN du film dissout dans le DMSO montrent la récupération du PVA modifié par des furanes et avec présence du réticulant PDM sous sa forme réagie essentiellement.

Ce recyclage montre que les fibres de polymère sont récupérées intactes et peuvent à nouveau être utilisées dans le procédé de fabrication de l'invention. L'apparition d'un film de polymère lors du séchage du filtrat montre que les réactifs initiaux sont bien récupérés et qu'ils peuvent à nouveau réticuler. Ils peuvent donc être réutilisés (avant séchage du filtrat) dans le procédé de fabrication selon l'invention.

Ainsi la présente invention permet d'obtenir des architectures fibreuses à des températures comprises entre 25 et 90 °C, et qui sont recyclables par retro-Diels-Alder à partir de températures supérieures à 100 °C. Ces architectures sont utilisables pour du garnissage avec des portances appropriées et une densité moindre, en vue de former des assises améliorées dans le domaine des transports notamment. Le procédé utilise un solvant vert et les réactions chimiques mises en oeuvre sont réversibles de sorte que l'architecture fibreuse est recyclable et les composants (fibre, polymère hydrophile et réactifs de cyclo-addition) peuvent être réutilisés.

Il va de soi que l'invention n'est pas limitée aux variantes de réalisation décrites ci-dessus à titre d'exemple mais qu'elle comprend tous les équivalents techniques et les variantes des moyens décrits ainsi que leurs combinaisons.

## Revendications

1. Procédé de fabrication d'architectures fibreuses recyclables, le procédé de fabrication comprenant les étapes suivantes :
- a) fourniture d'une solution aqueuse dans laquelle est dissout au moins un polymère hydrosoluble,
- b) fonctionnalisation du polymère hydrosoluble par réaction d'un premier réactif de type diène et/ou d'un deuxième réactif de type diénophile, le premier réactif et le deuxième réactif formant un couple de cyclo-addition apte à réaliser une réaction de cyclo-addition réversible, notamment une réaction de cyclo-addition réversible de type Diels Alder,
- c) addition respective du deuxième réactif et/ou du premier réactif du couple de réactifs de sorte à obtenir une formulation de précurseurs de la formulation d'adhésif,
- d) enduction de fibres de polymère, par la formulation de précurseurs,
- e) application d'un traitement thermique de réticulation de la formulation de précurseurs de sorte à obtenir une formulation d'adhésif apte à assembler de manière réversible les fibres de polymère en une architecture fibreuse recyclable.

2. Procédé de fabrication selon la revendication 1, dans lequel le polymère hydrophile comprend des terminaisons hydroxyles.

3. Procédé de fabrication selon la revendication 1, lequel comprend une étape i) d'application d'un pré-traitement thermique de pré-réticulation avant l'étape d) du procédé, de sorte à réticuler en partie la formulation de polymère.

4. Procédé de fabrication selon la revendication 1 ou 2, lequel comprend avant et /ou pendant la réalisation de l'étape d'application d'un traitement thermique de réticulation de réticulation e), une étape de compression ii) des fibres de polymère enduites de sorte à essorer les fibres de polymère et retirer le surplus de la formulation de précurseurs.

5. Procédé de fabrication selon la revendication 4, dans lequel l'étape de compression ii) est réalisée en appliquant localement différentes valeurs de pression de sorte à obtenir des régions plus ou moins denses et de rigidité variable dans l'architecture fibreuse recyclable à l'issue de l'étape e).

6. Procédé de fabrication selon l'une des revendication 1 à 5, dans lequel le polymère hydrosoluble est choisi parmi un alcool polyvinylique PVA, un polyéthylène glycol PEG, et/ou un polysaccharide.

7. Procédé de fabrication selon l'une des revendication 1 à 6, dans lequel le polymère hydrosoluble est un dérivé de polyacétate de vinyle comprenant taux d'hydrolyse de 95%.

8. Procédé de fabrication selon l'une des revendication 1 à 7, dans lequel le polymère hydrosoluble est un dérivé de polyacétate de vinyle et le taux de fonctionnalisation par des groupements furanes est compris dans une fourchette allant de 1 % à 6,5 % en mole.

9. Procédé de fabrication selon la revendication 1 à 7, dans lequel le rapport de masse d'adhésif sec par masse de fibre de polymère est compris entre 10 et 30 % dans l'architecture fibreuse recyclable obtenue à l'étape e).

10. Procédé de fabrication-selon l'une des revendications 1 à 9, lequel comprend une étape iii) de structuration de la formulation de précurseurs réalisée avant ou pendant l'étape e).

11. Procédé de recyclage de l'architecture fibreuse recyclable obtenue selon le procédé de fabrication selon les revendications 1 à 10, comprenant les étapes de :
- x) disposition de l'architecture fibreuse dans un autoclave en présence d'eau,
- y) application d'un traitement thermique à une température compris entre 100 et 130 °C pendant quelques heures,
- z) filtration des fibres de polymère permettant de séparer les fibres de polymère et un filtrat comprenant le polymère hydrosoluble et le premier réactif et le deuxième réactif du couple de cyclo-addition.
